# FASCICULE DE BREVET EUROPEEN

(11) **EP 1 059 135 B1**
(45) Date de publication et mention de la délivrance du brevet: **07.04.2004**
(21) Numéro de dépôt: 00420122.4
(22) Date de dépôt: 08.06.2000
(51) Int. Cl.: B23B 5/16

(54) **Dispositif de chanfreinage et de marquage pour tube.**
Vorrichtung zum Anfasen und Markieren für Rohre
Device for chamfering and marking for tubes

(30) Priorité: 09.06.1999 FR 9907508
(43) Date de publication de la demande: 13.12.2000
(73) Titulaire: COMAP, F-45550 Saint Denis de l'Hôtel (FR)
(72) Inventeur: Sellier, Marc, 45450 Donnery (FR); Tuffe, Stéphane, 69740 Genas (FR)
(74) Mandataire: Maureau, Philippe

(56) Documents cités:
- US-A- 5 853 272

## Description

La présente invention concerne un dispositif de chanfreinage et de marquage pour tube.

Lorsqu'on réalise un raccordement d'une extrémité d'un tube, il est connu de réaliser un ébavurage à l'extrémité du tube à raccorder. Des dispositifs, ressemblant à de gros taille-crayons, existent pour réaliser un tel ébavurage. Ces dispositifs ont généralement une forme tronconique pour pouvoir s'adapter à plusieurs diamètres extérieurs de tubes.

En outre, pour permettre de garantir un bon enfoncement de l'extrémité du tube dans le raccord, il est connu de réaliser un marquage à une distance prédéterminée de la face frontale de cette extrémité de tube. Ce marquage est par exemple réalisé à l'aide d'un stylo.

Un dispositif selon la préambule de la revendication 1 est décrit par le document US 5 853 272 A.

La présente invention a pour but de fournir un dispositif qui permet de réaliser à la fois le chanfreinage ou ébavurage et le marquage d'une extrémité d'un tube en vue de son raccordement.

A cet effet, le dispositif qu'elle propose est un dispositif de chanfreinage pour une extrémité de tube comportant un corps dans lequel est réalisé un alésage permettant l'introduction d'un tube à chanfreiner ou ébavurer ainsi qu'une lame fixée sur le corps et faisant saillie à l'intérieur de l'alésage.

Selon l'invention, ce dispositif comporte en outre au moins un organe de marquage s'étendant sensiblement radialement par rapport à l'alésage et mobile entre une première position de marquage où il fait saillie à l'intérieur de l'alésage et une position de repos dans laquelle le ou les organes de marquage sont retirés de l'alésage.

De cette manière, il est possible lors d'une même opération de réaliser à la fois un chanfreinage et un marquage sur un tube. En effet, il suffit lors du chanfreinage de maintenir le ou les organes de marquage enfoncés vers l'alésage dans lequel est placé le tube pour réaliser le marquage. Le marquage peut être un marquage superficiel permettant un repérage visuel ou un marquage plus profond assurant la formation d'une rainure permettant l'accrochage d'une bague d'accrochage. Les deux types de marquage peuvent ou non être réalisés sur un même tube. Pour réaliser un marquage superficiel il est possible d'utiliser une pointe en acier ou similaire, tandis que pour réaliser une rainure, il est possible d'utiliser une molette.

Pour qu'au repos le ou les organes de marquage ne fassent pas saillie dans l'alésage et ne gêne donc pas l'introduction d'un tube, chaque organe est avantageusement précontraint élastiquement dans sa position de repos.

Pour pouvoir assurer un bon positionnement du marquage, l'alésage est de préférence de diamètre sensiblement constant et présente avantageusement un épaulement destiné à servir de butée à l'extrémité du tube à chanfreiner, l'organe de marquage étant alors placé à une distance prédéterminée de la butée et la lame faisant saillie dans l'alésage au niveau de la butée.

Pour permettre avec un même dispositif le chanfreinage ou ébavurage et le marquage de tubes de différents diamètres, le corps est par exemple un corps tubulaire qui présente à ses deux extrémités des ouvertures circulaires de diamètres différents. Dans ce cas, une forme de réalisation peut prévoir que le corps présente une forme sensiblement cylindrique circulaire et deux alésages épaulés réalisés à partir des deux faces frontales du corps. Il est alors possible de chanfreiner et marquer quatre diamètres de tubes avec un même dispositif.

Dans une forme de réalisation, le dispositif comporte une barrette s'étendant longitudinalement et portant l'organe de marquage au nombre d'au moins un. En cas de présence de plusieurs organes de marquage dans un dispositif, la barrette porte avantageusement tous ces organes.

Pour permettre de réaliser un chanfreinage et un marquage en réalisant une rotation de 120° du dispositif, ce dernier comporte avantageusement trois lames disposées sensiblement radialement par rapport à l'alésage et réparties autour de ce dernier.

Pour permettre le marquage de tubes en matière synthétique, par exemple en polyéthylène réticulé, le dispositif comporte par exemple un alésage radial dans chaque plan transversal contenant un organe de marquage. Il est alors possible de glisser un stylo, un feutre par exemple, dans l'alésage radial lors du chanfreinage en veillant à laisser les organes de marquage dans leur position de repos durant cette opération pour ne pas abîmer le tube en matière synthétique.

Pour des tubes destinés à être emmanchés dans des raccords instantanés, le dispositif peut comporter deux organes de marquage pour chaque alésage destiné à recevoir un tube de diamètre prédéterminé. On peut ainsi graver deux marquages annulaires à l'extrémité du tube à raccorder. Un marquage est alors réalisé pour permettre de visualiser le bon enfoncement du tube, tandis que l'autre marquage est destiné à venir prendre place au niveau de dents d'accrochage présentes généralement dans un raccord instantané.

Le corps est avantageusement réalisé en matière synthétique par moulage et les lames sont alors de préférence surmoulées lors du moulage du corps.

De toute façon, l'invention sera bien comprise à l'aide de la description qui suit, en référence au dessin schématique annexé représentant à titre d'exemple non limitatif deux formes de réalisation d'un dispositif de chanfreinage et de marquage selon l'invention.
Figure 1 en est une vue en perspective éclatée d'un premier dispositif,
Figure 2 est une vue en coupe selon la ligne II-II de la figure 3,
Figure 3 est une vue de dessus à échelle agrandie du dispositif de la figure 1,
Figure 4 est une vue en coupe selon la ligne de coupe IV-IV de la figure 3,
Figure 5 est une vue en coupe longitudinale d'un raccord instantanée mettant en oeuvre un tube réalisé avec un dispositif de chanfreinage et de marquage selon l'invention,
Figure 6 est une vue en coupe longitudinale d'un second dispositif.

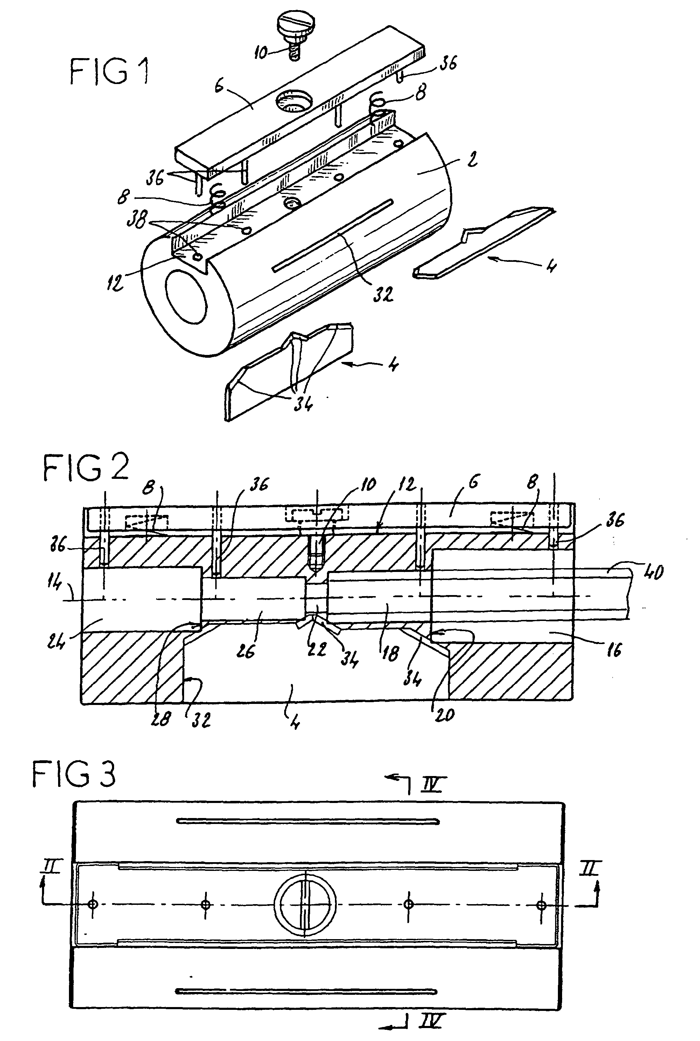

La figure 1 montre en perspective éclatée une forme de réalisation d'un dispositif de chanfreinage et de marquage selon l'invention. Ce dispositif comporte un corps 2, trois lames 4 (seules deux de ces lames sont représentées sur la figure 1), une barrette 6, deux ressorts 8 et une vis 10.

Le corps 2 est réalisé en matière synthétique par moulage. Il présente une forme extérieure sensiblement cylindrique circulaire. Une rainure 12 s'étendant axialement est prévue à la périphérie du corps 2 pour recevoir la barrette 6. Le corps 2 est traversé de part en part par un alésage étagé d'axe 14. Cet axe 14 correspond sensiblement à l'axe de révolution de l'enveloppe cylindrique circulaire du corps 2. Cet alésage comporte cinq zones de diamètres différents. A une extrémité, à droite sur la figure 2, se trouve une première zone 16 de plus grand diamètre. Une zone 18, de diamètre inférieur à celui de la zone 16 est adjacent à cette zone 16. Un épaulement 20 sépare ces deux zones. Au centre du corps 2, l'alésage présente son plus petit diamètre dans une zone référencée 22. A l'autre extrémité du corps 2, on retrouve une zone 24 de grand diamètre et une zone adjacente 26 de diamètre plus petit. Un épaulement 28 est réalisé entre ces deux zones 24 et 26. Les quatre zones 16, 18, 24 et 26 sont de quatre diamètres différents. Elles correspondent sensiblement aux diamètres extérieurs de tubes normalisés. Entre chacune des zones 18 et 26 et la zone de plus petit diamètre 22 est également réalisé un épaulement 30.

Le corps 2 présente trois fentes 32 recevant chacune une lame 4. Lorsque ces dernières sont en place dans le corps 2, elles sont disposées dans un plan contenant l'axe 14. Les trois plans contenant les trois lames 4 sont décalés angulairement de 120° l'un par rapport à l'autre.

Les lames 4 sont des lames métalliques présentant chacune quatre parties coupantes formant quatre couteaux 34. Chaque couteau prend place au niveau d'un épaulement et est incliné par rapport à l'axe 14. Les couteaux 34 font légèrement saillie à l'intérieur des zones 16, 18, 24, 26.

Les lames 4 sont fixées dans le corps 2 par surmoulage. Elles sont donc placées dans le moule destiné à la réalisation du corps 2 avant l'injection de matière synthétique pour la réalisation de ce corps.

La barrette 6 se présente sous la forme d'une lame de laquelle font saillies vers le corps 2 quatre doigts 36. Chaque doigt 36 est destiné à coulisser dans un alésage 38 radial correspondant réalisé dans le corps 2. Chaque alésage radial 38 débouche dans une zone 16, 18, 24, 26 différente de l'alésage traversant du corps 2.

Les ressorts 8 sont disposés entre le corps 2 et la barrette 6. Ainsi, les ressorts 8 tendent à faire sortir vers l'extérieur du corps 2 les doigts 36. La barrette 6 est maintenue sur le corps 2 à l'aide de la vis 10. Cette dernière permet de limiter la course des doigts 36 lorsque ceux-ci s'éloignent de l'alésage traversant réalisé dans le corps 2. Les doigts 36 peuvent alors se déplacer entre une position dans laquelle ils font chacun saillie à l'intérieur d'une zone 16, 18, 24, 26 de l'alésage traversant du corps 2 et une position dans laquelle ils sont en retrait vis-à-vis de ces zones de l'alésage traversant.

Le fonctionnement de ce dispositif est alors le suivant. Un tube à chanfreiner et à marquer est introduit dans le corps 2. On l'introduit par la bonne extrémité de manière à ce qu'il vienne prendre place dans une zone de l'alésage traversant le corps 2 d'un diamètre correspondant à son diamètre extérieur. Sur la figure 2, on a représenté un tube 40 dont le diamètre extérieur correspond au diamètre intérieur de la zone 18. Ce tube 40 vient buter avec sa face frontale contre un épaulement 30. Le bord extérieur de cette zone frontale est alors au contact à chaque fois du couteau 36 correspondant d'une lame 4. En tournant le tube 40 dans le corps 2, on réalise ainsi le chanfreinage de l'extrémité de ce tube 40. Si en même temps que l'on réalise l'opération de chanfreinage, on vient appuyer sur la barrette 6 de manière à faire pénétrer les doigts 36 dans l'alésage étagé traversant, on grave alors une marque annulaire à la périphérie du tube 40. Les doigts 36 et les alésages 38 correspondant sont disposés de telle sorte que la distance entre le marquage ainsi réalisé et la face frontale du tube chanfreiné corresponde à une distance prédéterminée. Cette distance est telle que, lorsque le tube est introduit dans un raccord, le marquage vient affleurer la face frontale du raccord. L'utilisateur peut ainsi visualiser le bon enfoncement du tube dans le raccord.

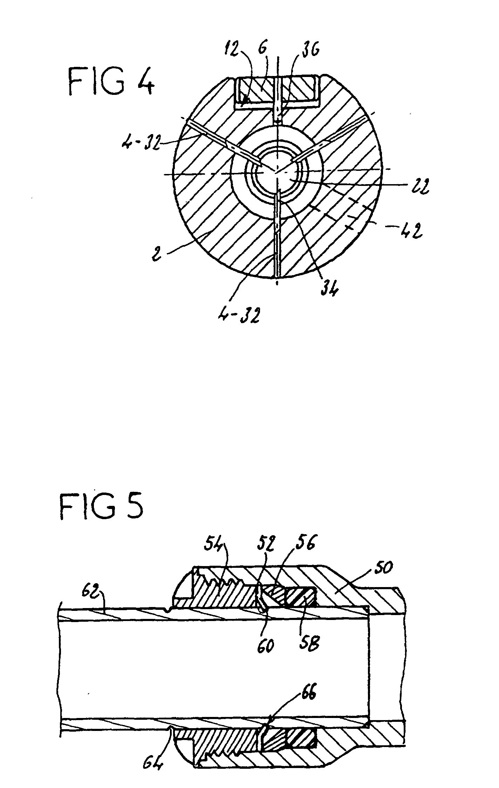

Les doigts 36 sont réalisés en acier de manière à pouvoir venir marquer un tube en cuivre ou un tube en acier. Pour des tubes en matière synthétique, par exemple en polyéthylène réticulé, on ne peut pas utiliser cette technique. La figure 4 montre alors une variante de réalisation qui permet également le marquage de tube en matière synthétique. On remarque sur la figure 4 en pointillés un alésage radial 42 qui débouche dans l'alésage traversant étagé du corps 2. En fait, on a quatre alésages radiaux 42 qui se trouvent chacun à la hauteur d'un alésage 38 destiné au passage d'un doigt 36. Ces alésages radiaux sont par exemple décalés de 120° par rapport aux alésages radiaux 38. Chaque alésage 42 est destiné à recevoir un stylo, par exemple un stylo feutre.

Ainsi, pour un tube en matière synthétique, on vient chanfreiner celui-ci comme un tube en cuivre ou en acier, mais le marquage est réalisé à l'aide d'un stylo, par exemple un stylo feutre. Il faut alors veiller à ne pas venir appuyer sur la barrette 6 pendant l'opération de chanfreinage. A cet effet, on peut imaginer un blocage de la barrette 6 dans la position sortie des doigts 36. Plusieurs moyens permettent de réaliser ce blocage. On peut par exemple imaginer deux cales venant s'adapter à chaque extrémité de la barrette 6 entre cette dernière et le corps 2.

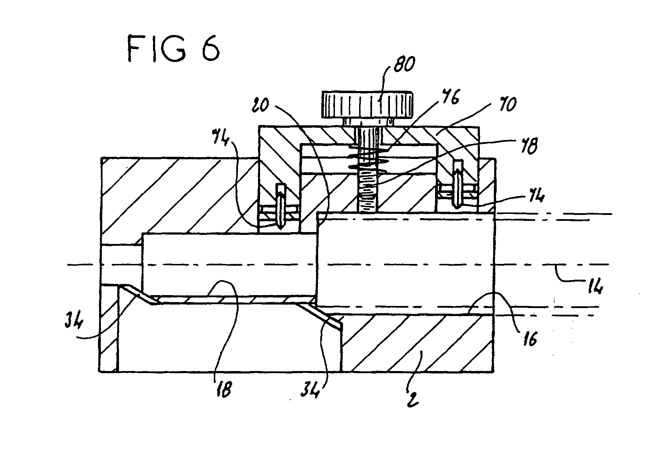

Une variante de réalisation non représentée au dessin prévoit de munir la barrette 6 de deux doigts 36 par zones 16, 18, 24, 28 de l'alésage étagé traversant du corps 2. On peut ainsi réaliser deux marquages sur un tube lors du chanfreinage. Comme précédemment, un marquage permet alors de vérifier le bon positionnement du tube dans un raccord. Le deuxième marquage sert par exemple pour un raccord tel que celui représenté sur la figure 5.

On trouve sur cette figure 5 un raccord instantané de type connu. Ce raccord comporte un corps 50, une bague d'accrochage 52, une douille 54, une entretoise 56 et un joint torique 58. La bague d'accrochage comporte une partie périphérique annulaire à laquelle sont rattachées des dents 60 s'étendant radialement de façon légèrement inclinée vers l'intérieur du raccord. On a ici un tube 62 qui a été chanfreiné et marqué dans un dispositif selon l'invention comportant deux doigts de marquage pour chaque zone destinée à recevoir une extrémité de tube. Un premier marquage 64 se trouve au niveau de la face frontale du raccord. Le second marquage 66 se trouve quant à lui au niveau des dents 60. Ce second marquage 66 est avantageux lorsque la dureté du matériau constitutif du tube 62 est supérieure à la dureté du matériau utilisé pour réaliser la bague d'accrochage 52. En outre, en cas de problème avec un raccord instantané, il est possible de voir, après démontage, si le tube a bien été mis en place dans le raccord. En effet, les dents 60 de la bague d'accrochage 52 laissent à la périphérie du tube 62 des marques. En analysant ces marques, on peut déterminer si à l'état monté les dents 60 de la bague d'accrochage 52 se trouvaient bien au niveau du marquage 66.

La figure 6 représente une variante d'exécution de ce dispositif dans laquelle les mêmes éléments sont désignés par les mêmes références que précédemment. Sur le corps 2 est monté coulissant transversalement à celui-ci, un coulisseau 70 dont les extrémités des branches, pénétrant dans les deux zones 16, 18 de l'alésage destinées à recevoir deux types de tubes, sont chacune équipées d'une molette 74. Le coulisseau est soumis à l'action permanente d'un ressort 76 qui tend à l'éloigner du corps 2 et peut être déplacé en direction du corps 2, pour permettre la pénétration des molettes 74 à l'intérieur de l'alésage pour prendre appui sur la surface d'un tube, par l'intermédiaire d'une vis 78 équipée d'un bouton moleté 80. Par rotation du tube relativement au corps 2, il est possible de réaliser, à l'aide d'une molette 74, une rainure périphérique.

Comme il va de soi, l'invention ne se limite pas aux formes de réalisation décrites ci-dessus à titre d'exemples non limitatifs ; elle en embrasse au contraire toutes les variantes dans le cadre des revendications ci-après.

Ainsi, par exemple, le dispositif selon l'invention ne comporte pas forcément trois lames. Une seule peut suffire. Cette lame n'est pas forcément fixée dans le corps du dispositif par surmoulage. On pourrait imaginer toute autre sorte de fixation : collage, vissage, etc..

La forme du corps est donnée à titre indicatif. On pourrait avoir une forme tout à fait différente. De même, le nombre de zones de diamètres différents n'est pas forcément égal à quatre. On pourrait avoir un dispositif destiné à un seul diamètre de tube. Tout autre nombre est également envisageable.

L'alésage traversant le corps du dispositif décrit ci-dessus pourrait être un alésage borgne.

Les moyens mis en oeuvre pour déplacer les doigts de marquage peuvent être remplacés par d'autres moyens. On pourrait avoir un poussoir correspondant à chaque doigt de marquage. Les doigts de marquage pourraient également être combinés dans un même corps, à des molettes de rainurage.

## Revendications

1. Dispositif de chanfreinage pour une extrémité de tube comportant un corps (2) dans lequel est réalisé un alésage permettant l'introduction d'un tube (40) à chanfreiner ou ébavurer ainsi qu'une lame (4) fixée sur le corps et faisant saillie à l'intérieur de l'alésage,
**caractérisé en ce qu'**il comporte en outre au moins un organe de marquage (36, 74) s'étendant sensiblement radialement par rapport à l'alésage et mobile entre une première position de marquage où il fait saillie à l'intérieur de l'alésage (16,18,24,26) et une position de repos dans laquelle le ou les organes de marquage sont retirés de l'alésage (16,18,24,26).

2. Dispositif selon la revendication 1, **caractérisé en ce que** chaque organe de marquage (36, 74) est précontraint élastiquement dans sa position de repos.

3. Dispositif selon l'une des revendications 1 ou 2, **caractérisé en ce que** l'alésage est de diamètre sensiblement constant et présente un épaulement (20,28,30) destiné à servir de butée à l'extrémité du tube à chanfreiner (40), le doigt (36) étant placé à une distance prédéterminée de la butée et la lame (4) faisant saillie dans l'alésage au niveau de la butée.

4. Dispositif selon l'une des revendications 1 à 3, **caractérisé en ce que** le corps (2) est tubulaire et présente à ses deux extrémités des ouvertures circulaires de diamètres différents.

5. Dispositif selon la revendication 4, **caractérisé en ce que** le corps (2) est sensiblement cylindrique circulaire et présente deux alésages épaulés (16,18 ; 24,26) réalisés à partir des deux faces frontales du corps.

6. Dispositif selon l'une des revendications 1 à 5, **caractérisé en ce qu'**il comporte une barrette (6) ou un coulisseau (70), déplaçable transversalement au corps et portant au moins un organe de marquage (36, 74) débouchant dans l'alésage du corps.

7. Dispositif selon l'une des revendications 1 à 6, **caractérisé en ce qu'**il comporte trois lames (4) disposées sensiblement radialement par rapport à l'alésage et réparties autour de ce dernier.

8. Dispositif selon l'une des revendications 1 à 7, **caractérisé en ce que** chaque organe de marquage est constitué par une pointe en acier ou doigt (36).

9. Dispositif selon la revendication 8, **caractérisé en ce qu'**il comporte en outre un alésage radial (42) dans chaque plan transversal contenant un doigt de marquage (36).

10. Dispositif selon l'une des revendications 8 et 9, **caractérisé en ce qu'**il comporte deux doigts (36) de marquage pour chaque alésage (16,18,24,26) destiné à recevoir un tube de diamètre prédéterminé.

11. Dispositif selon l'une des revendications 1 à 10, **caractérisé en ce que** le corps (2) est réalisé en matière synthétique par moulage et **en ce que** les lames (4) sont surmoulées lors du moulage du corps (2).

12. Dispositif selon l'une des revendications 1 à 7, **caractérisé en ce que** chaque organe de marquage est constitué par une molette (74).

## Patentansprüche

1. Vorrichtung für das Anfasen eines Rohrendes, mit einem Körper (2), in dem eine Bohrung eingearbeitet ist, die das Einführen eines anzufasenden oder entgratenden Rohrs (40) ermöglicht, sowie einer Klinge (40), die an dem Körper befestigt ist und ins Innere der Bohrung ragt,
**dadurch gekennzeichnet, dass** sie ausserdem mindestens ein Markierungselement (36, 74) aufweist, das sich im wesentlichen radial zu der Bohrung erstreckt und beweglich ist zwischen einer ersten Markierungsposition, in der es ins Innere der Bohrung (16, 18, 24, 26) ragt, und einer Ruheposition, in der das oder die Markierungselemente von der Bohrung (16, 18, 24, 26) zurückgezogen sind.

2. Vorrichtung nach Anspruch 1, **dadurch gekennzeichnet, dass** jedes Markierungselement (36, 74) in seiner Ruheposition elastisch vorgespannt ist.

3. Vorrichtung nach einem der Ansprüche 1 oder 2, **dadurch gekennzeichnet, dass** die Bohrung einen im wesentlichen konstanten Durchmesser hat und eine Schulter (20, 28, 30) aufweist, die als Anschlag für das anzufasende Ende des Rohres (40) bestimmt ist, wobei ein Stift (36) in einer vorbestimmten Entfernung von dem Anschlag und der bei dem Anschlag in die Bohrung ragenden Klinge (4) angeordnet ist.

4. Vorrichtung nach einem der Ansprüche 1 bis 3, **dadurch gekennzeichnet, dass** der Körper (2) rohrförmig ist und an seinen beiden Enden kreisförmige Öffnungen unterschiedlicher Durchmesser aufweist.

5. Vorrichtung nach Anspruch 4, **dadurch gekennzeichnet, dass** der Körper (2) im wesentlichen kreiszylindrisch ist und zwei mit Schultern versehene Bohrungen (16, 18; 24, 26) aufweist, die ausgehend von den beiden Stirnflächen des Körpers eingearbeitet sind.

6. Vorrichtung nach einem der Ansprüche 1 bis 5, **dadurch gekennzeichnet, dass** sie eine Steg (6) oder einen Schieber (70) aufweist, der in der Querrichtung des Körpers bewegbar ist und mindestens ein Markierungselement (36, 74) trägt, das in die Bohrung des Körpers mündet.

7. Vorrichtung nach einem der Ansprüche 1 bis 6, **dadurch gekennzeichnet, dass** sie drei Klingen (4) aufweist, die im wesentlichen radial bezüglich der Bohrung angeordnet und um diese herum verteilt sind.

8. Vorrichtung nach einem der Ansprüche 1 bis 7, **dadurch gekennzeichnet, dass** jedes Markierungselement aus einer Stahlspitze oder einem Stift (36) gebildet ist.

9. Vorrichtung nach Anspruch 8, **dadurch gekennzeichnet, dass** sie ausserdem in jeder einen Markierungsstift (36) enthaltenden Querebene eine radiale Bohrung (42) aufweist.

10. Vorrichtung nach einem der Ansprüche 8 und 9, **dadurch gekennzeichnet, dass** sie zwei Markierungsstifte (36) für jede Bohrung (16, 18, 24, 26) aufweist, die zur Aufnahme eines Rohrs mit vorbestimmtem Durchmesser bestimmt ist.

11. Vorrichtung nach einem der Ansprüche 1 bis 10, **dadurch gekennzeichnet, dass** der Körper (2) aus einem Kunststoffmaterial durch Giessen hergestellt ist und dass die Klingen (4) während des Giessens des Körpers (2) umgossen werden.

12. Vorrichtung nach einem der Ansprüche 1 bis 7, **dadurch gekennzeichnet, dass** jedes Markierungselement aus einem Rändelrad (74) gebildet ist.

## Claims

1. Chamfering device for an end of a tube, comprising a body (2) in which there is formed a bore allowing the tube (40) that is to be chamfered or deburred to be introduced, and a blade (4) fixed to the body and projecting into the bore, **characterized in that** it further comprises at least one marking member (36, 74) running roughly radially with respect to the bore and able to move between a first, marking, position in which it projects into the bore (16, 18, 24, 26) and a rest position in which the marking member or members are withdrawn from the bore (16, 18, 24, 26).

2. Device according to Claim 1, **characterized in that** each marking member (36, 74) is elastically prestressed into its rest position.

3. Device according to one of Claims 1 and 2, **characterized in that** the bore is of roughly constant diameter and has a step (20, 28, 30) intended to act as an end stop for the end of the tube (40) that is to be chamfered, the finger (36) being placed at a predetermined distance from the stop and the blade (4) projecting into the bore in the region of the stop.

4. Device according to one of Claims 1 to 3, **characterized in that** the body (2) is tubular and at its two ends has circular openings of different diameters.

5. Device according to Claim 4, **characterized in that** the body (2) is more or less circular cylindrical and has two stepped bores (16, 18; 24, 26) made from the two transverse end faces of the body.

6. Device according to one of Claims 1 to 5, **characterized in that** it comprises a strip (6) or a slide (70) that can be moved transversely to the body and that bears at least one marking member (36, 74) opening into the bore of the body.

7. Device according to one of Claims 1 to 6, **characterized in that** it comprises three blades (4) arranged roughly radially with respect to the bore and distributed about the latter.

8. Device according to one of Claims 1 to 7, **characterized in that** each marking member consists of a steel point or finger (36).

9. Device according to Claim 8, **characterized in that** it further comprises a radial bore (42) in each transverse plane containing a marking finger (36).

10. Device according to one of Claims 8 and 9, **characterized in that** it comprises two marking fingers (36) for each bore (16, 18, 24, 26) intended to receive a tube of given diameter.

11. Device according to one of Claims 1 to 10, **characterized in that** the body (2) is made of a synthetic material by moulding and **in that** the blades (4) are overmoulded when the body (2) is being moulded.

12. Device according to one of Claims 1 to 7, **characterized in that** each marking member consists of a scribing wheel (74).
